# EUROPEAN PATENT APPLICATION

(11) **EP 4 274 335 A1**
(43) Date of publication of application: **08.11.2023**
(21) Application number: 21914079.5
(22) Date of filing: 22.12.2021
(51) Int. Cl.: H04W 72/04

(54) **INFORMATION TRANSMISSION METHOD AND APPARATUS, RELATED DEVICE AND STORAGE MEDIUM**

(30) Priority: 30.12.2020 CN 202011612358
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHEN, Ningyu, Beijing 100053 (CN); HAN, Xingyu, Beijing 100053 (CN); LIU, Liang, Beijing 100053 (CN)
(74) Representative: GPI Brevets
(86) International application number: PCT/CN2021/140490
(87) International publication number: WO 2022/143342

(57) **Abstract**

The present application discloses an information transmission method, an information transmission apparatus, a first access network device, a second access network device, a terminal and a storage medium, where the method includes: sending, by a first access network device, a connection release message to a terminal; sending at least one of the following information to at least one second access network device: first information, where the first information indicates a radio access network (RAN) notification area configuration of the terminal; second information, where the second information indicates the second access network device to disconnect from the terminal; third information, where the third information indicates an identifier of the terminal.

## Description

### CROSS REFERENCE OF RELATED APPLICATION

The present application claims a priority of Chinese patent application No. 202011612358.1 filed on December 30, 2020, the content of which is incorporated herein by reference in its entirety.

### TECHNICAL FIELD

The present application relates to the field of radio communication, and in particular to an information transmission method, an information transmission apparatus, a related device and a storage medium.

### BACKGROUND

In a case that a service needs to call a terminal in an inactive state, the network side will initiate a paging to the terminal. In the related technology, the terminal can only reside in one cell, that is, the serving cell, so as to receive the paging message of the serving cell, that is to say, the slice (which can be expressed as slice in English) service that the terminal can obtain in the serving cell must be a subset of the slice supported by the serving cell. Therefore, even if the network slice of the adjacent cell (same-frequency adjacent cell or inter-frequency adjacent cell) is a slice supported by the terminal, the terminal in the inactive state can only reside in the serving cell, therefore, the terminal cannot receive the paging message of the adjacent cell slice, so that the terminal cannot obtain the service of the adjacent cell slice.

### SUMMARY

To solve related technical problems, embodiments of the present application provide an information transmission method, an information transmission apparatus, a related device, and a storage medium.

The technical solution of the embodiment of the present application is implemented in this way.

An embodiment of the present application provides an information transmission method, applied to a first access network device, which includes:
sending a connection release message to a terminal;
sending at least one of the following information to at least one second access network device:
   first information, where the first information indicates a radio access network (RAN) notification area configuration of the terminal;
   second information, where the second information indicates the second access network device to disconnect from the terminal;
   third information, where the third information indicates an identifier of the terminal.

In the above-mentioned scheme, the second information indicates at least one of the following:
indicating the second access network device to suspend the connection with the terminal;
indicating the second access network device to save a context of the terminal;
indicating the second access network device to save the connection with a core network.

In the above-mentioned scheme, the terminal support at least two network slices in at least two cells or frequency points simultaneously.

In the above-mentioned scheme, the method further includes:
sending information of an allowed network slice to the terminal, where the allowed network slice includes a first network slice; the first access network device does not support the first network slice; the second access network device supports the first network slice; the terminal can access the second access network device through carrier aggregation (CA) or multi-connection.

In the above-mentioned scheme, the method further includes:
receiving a capability reported by the terminal, where the capability represents that the terminal simultaneously supports at least two network slices in at least two cells or frequency points.

In the above-mentioned scheme, the method further includes:
using, in a case that downlink data is received, information of the RAN notification area configuration to initiate an RAN paging to the terminal.

An embodiment of the present application also provides an information transmission method, applied to a second access network device, which includes:
receiving at least one of the following information sent by a first access network device:
first information, where the first information indicates an RAN notification area configuration of a terminal;
second information, where the second information indicates at least one of the second access network device to disconnect from the terminal;
third information, where the third information indicates an identifier of the terminal.

In the above-mentioned scheme, the second information indicates at least one of the following:
indicating the second access network device to suspend the connection with the terminal;
indicating the second access network device to save a context of the terminal;
indicating the second access network device to save the connection with a core network.

In the above-mentioned scheme, the terminal support at least two network slices in at least two cells or frequency points simultaneously.

In the above-mentioned scheme, using, in a case that the first information is received, when downlink data is received, information of the RAN notification area configuration to initiate an RAN paging to the terminal.

An embodiment of the present application also provides an information transmission method, applied to a terminal, which includes:
receiving a connection release message sent by a first access network device, where the terminal is connected to the first access network device and at least one second access network device, and the terminal support at least two network slices in at least two cells or frequency points simultaneously.

In the above-mentioned scheme, the method further includes:
receiving information of an allowed network slice sent by the first access network device, where the allowed network slice includes a first network slice; the first access network device does not support the first network slice; the second access network device supports the first network slice; the terminal can access the second access network device through CA or multi-connection.

In the above-mentioned scheme, the method further includes:
reporting a capability to the first access network device, where the capability represents that the terminal simultaneously supports at least two network slices in at least two cells or frequency points.

In the above-mentioned scheme, the method further includes:
receiving a RAN paging message initiated by the first access network device and/or the second access network device.

An embodiment of the present application also provides an information transmission apparatus, which includes:
a first sending unit, configured to send a connection release message to a terminal;
a second sending unit, configured to send at least one of the following information to at least one second access network device:
first information, where the first information indicates an RAN notification area configuration of the terminal;
second information, where the second information indicates the second access network device to disconnect from the terminal;
third information, where the third information indicates an identifier of the terminal.

An embodiment of the present application also provides an information transmission apparatus, which includes:
a first receiving unit, configured to receive at least one of the following information sent by a first access network device:
first information, where the first information indicates an RAN notification area configuration of a terminal;
second information, where the second information indicates at least one of the second access network device to disconnect from the terminal;
third information, where the third information indicates an identifier of the terminal.

An embodiment of the present application also provides an information transmission apparatus, arranged in a terminal, which includes:
a third receiving unit, configured to receive a connection release message sent by a first access network device, where the terminal is connected to the first access network device and at least one second access network device, and the terminal support at least two network slices in at least two cells or frequency points simultaneously.

An embodiment of the present application also provides a first access network device, including: a first communication interface and a first processor; where
the first communication interface is configured to send a connection release message to a terminal; and is configured to send at least one of the following information to at least one second access network device:
first information, where the first information indicates an RAN notification area configuration of a terminal;
second information, where the second information indicates the second access network device to disconnect from the terminal;
third information, where the third information indicates an identifier of the terminal.

An embodiment of the present application also provides a second access network device, including: a second communication interface and a second processor; where
the second communication interface is configured to receive at least one of the following information sent by the first access network device:
first information, where the first information indicates an RAN notification area configuration of a terminal;
second information, where the second information indicates that at least one of the second access network device disconnects a connection with the terminal;
third information, where the third information indicates an identifier of the terminal.

An embodiment of the present application also provides a terminal, including: a third communication interface and a third processor; where
the third communication interface is configured to receive a connection release message sent by a first access network device; the terminal is connected to the first access network device and at least one second access network device, and the terminal support at least two network slices in at least two cells or frequency points simultaneously.

An embodiment of the present application also provides a first access network device, including: a first processor and a first memory configured to store a computer program capable of running on the processor,
where the first processor is configured to execute the steps of any method on the above-mentioned first access network device side when running the computer program.

An embodiment of the present application also provides a second communication device, which includes a second processor and a second memory configured to store a computer program capable of running on the processor,
where the second processor is configured to execute the steps of any method on the above-mentioned second access network device side when running the computer program.

An embodiment of the present application also provides a terminal, which includes: a third processor and a third memory configured to store a computer program capable of running on the processor,
where the third processor is configured to execute the steps of the method according to any one of claims 11 to 14 when running the computer program.

An embodiment of the present application also provides a storage medium, on which a computer program is stored, and when the computer program is executed by a processor, the steps of any method on the above-mentioned first access network device side are implemented, or the steps of any method on the above-mentioned second access network device side are implemented, or the steps of any method on the above-mentioned terminal side are implemented.

In the information indication method, information indication apparatus, related device, and storage medium provided by the embodiments of the present application, the first access network device sends a connection release message to a terminal; and sends at least one of the following information to at least one second access network device: first information, where the first information indicates an RAN notification area configuration of the terminal; second information, where the second information indicates the second access network device to disconnect from the terminal; third information, where the third information indicates an identifier of the terminal; the second access network device receives the information sent by the first access network device; in the scheme provided by the embodiment of the present application, in the process of the terminal entering the inactive state, since the information that enables the secondary node to also have the capability of paging the terminal is sent to the secondary node, so that both the primary node and the secondary node have the capability of paging the terminal, and the terminal in the inactive state obtain services of slices of different cells or frequency points, and receive paging messages of different slices simultaneously.

### BRIEF DESCRIPTION OF THE DRAWINGS

FIG. 1 is a schematic view of a position scenario where a terminal is located according to an embodiment of the present application;
FIG. 2 is a flowchart of a method for information transmission according to an embodiment of the present application;
FIG. 3 is a schematic view of a scenario in which a terminal respectively obtains two slice services through two base stations and a connection relationship between devices according to an embodiment of the present application;
FIG. 4 is a flowchart of another method for information transmission according to an embodiment of the present application;
FIG. 5 is a schematic structural view of an information transmission apparatus according to an embodiment of the present application;
FIG. 6 is a schematic structural view of another information transmission apparatus according to an embodiment of the present application;
FIG. 7 is a schematic structural view of a first access network device according to an embodiment of the present application;
FIG. 8 is a schematic structural view of a second access network device according to an embodiment of the present application;
FIG. 9 is a schematic structural view of a terminal according to an embodiment of the present application; and
FIG. 10 is a schematic structural view of an information transmission system according to an embodiment of the present application.

### DETAILED DESCRIPTION

The present application will be further described in detail below with reference with the drawings and embodiments.

The network side sends a paging message at the paging frame (PF)/paging occasion (PO) of paging, where the paging message carries the UE ID.

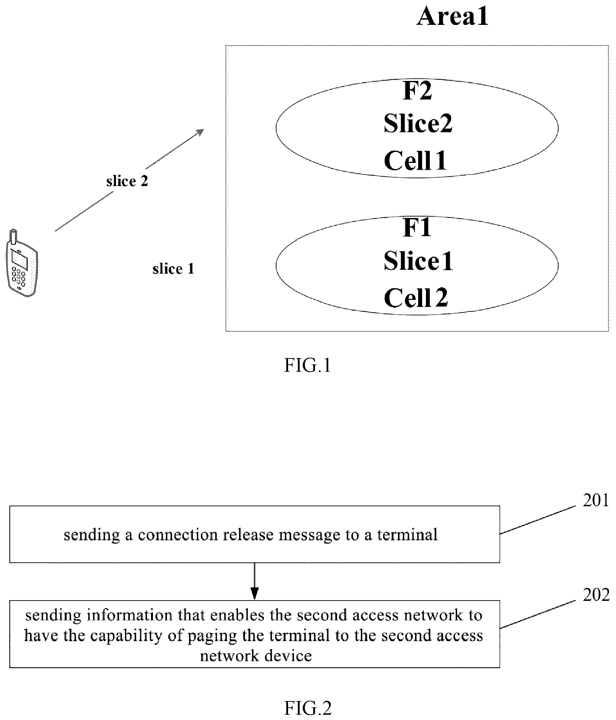

Since the terminal in an inactive state can only reside in one cell, the terminal receive the paging message of this cell. However, if the slices supported by the current cell and the neighbor cell are different, the terminal cannot receive the paging message of the slice of the neighbor cell, thereby leading to unreachability of the slice of the neighbor frequency or the neighbor cell. For example, as shown in FIG. 1, the terminal is in area 1 (Area 1), and Area 1 includes cell 1 (cell 1) (frequency point F2) and cell 2 (cell 2) (frequency point F 1), the terminal initiates access in cell 2, and the terminal reports UE capability to the network side. It is assumed that the terminal supports slice 1 and 2, the slice request (that is, the requested single network slice selection auxiliary information (requested S-NSSAI)) sent by the terminal to the network side will include slice 1 and slice 2. According to the regulations of related technologies, the terminal resides in cell 2, and cell 2 only supports slice 1, so the allowed S-NSSAI (allowed S-NSSAI) sent by the network side to the terminal only includes slice 1. That is to say, if the slices supported by the current cell and the adjacent cell or adjacent frequency are different, the terminal cannot receive the paging message of the adjacent cell or adjacent frequency slice. Therefore, when the terminal has the capability to simultaneously support multiple slices in different cells or different frequency points, how to receive the paging message of the adjacent cell slice in the inactive state, so as to obtain the service of the adjacent cell slice is an urgent problem to be solved at present.

Based on this, in various embodiments of the present application, the terminal has a new capability, which indicates that the terminal may simultaneously support multiple slices in different cells or frequency points, for a terminal that does not support the new capability, the terminal can only access the slice of one cell, and for a terminal that supports the new capability, the terminal simultaneously access multiple cells to obtain multiple different slice services, for example, the terminal accesses multiple cells through CA or multi-connection (such as dual connectivity (DC)) simultaneously, so that services of multiple different slices can be obtained simultaneously, that is, a terminal can simultaneously access slices of different cells through CA or multi-connection. Simultaneously, when the terminal enters the inactive state, both the base station of the current serving cell and the base stations of other neighboring cells retain the context of the terminal, so that both the base station of the current serving cell and the base stations of other neighboring cells have the capability of paging the terminal, and the terminal in the inactive state obtain services of slices of different cells or frequency points simultaneously, and receive paging messages of different slices.

An embodiment of the present application provides an information transmission method, applied to a first access network device, as shown in FIG. 2, the method includes:
step 201: sending a connection release message to a terminal;
step 202: sending at least one of the following information to at least one second access network device:
   first information, where the first information indicates an RAN notification area configuration of the terminal;
   second information, where the second information indicates the second access network device to disconnect from the terminal;
   third information, where the third information indicates an identifier of the terminal;
   that is, sending information that enables the second access network to have the capability of paging the terminal to the second access network device.

In practical applications, the access network device may specifically be a base station. A terminal may be called a user equipment (UE), or may be called a user.

In practical applications, in order to implement the solution of the embodiment of the present application, the terminal needs to simultaneously support at least two network slices in at least two cells or frequency points, that is, the terminal obtain services of at least two slices through at least two access network devices simultaneously.

Therefore, when the network side configures the allowed slices for the terminal, that is, when configuring the allowed S-NSSAI, if a certain slice is not supported by the current cell but the neighboring cell can provide the service of the slice through CA or multi-connection, the slice may be configured as an allowed slice for the terminal. For example, in the scenario shown in FIG. 1, the terminal is in serving cell 2, and cell 2 only supports slice 1, and cell 1 supports slice 2; the allowed slices configured for the terminal by the network side include slice 1 and slice 2. At this time, the terminal supports the capability of simultaneously accessing slice 1 and slice 2 through dual connectivity or CA. This means that when the terminal resides in cell 2, in a case that the service of slice 2 is initiated, the terminal may access cell 2 and establish a DC or CA with cell 1, so that the terminal may simultaneously obtain services of slice 1 and slice 2.

Based on this, in an embodiment, the method may also include:
sending information of an allowed network slice to the terminal, where the allowed network slice includes a first network slice; the first access network device does not support the first network slice; the second access network device supports the first network slice; the terminal can access the second access network device through CA or multi-connection.

Here, it should be noted that: in the embodiment of the present application, at least two slices allowed by the terminal need to be obtained from at least two cells, that is, at least two slices allowed by the terminal cannot be obtained through one cell.

In this embodiment of the present application, in a case that a terminal simultaneously accesses slices of different cells through CA or multi-connection, one cell is a primary cell, and the other cells are secondary cells, that is, the first access network device is a primary base station (also called master node), and the second access network device is a secondary base station (also called a secondary node).

In a case that the terminal enters an inactive state, the first access network device sends a connection release message to the terminal; the connection release message carries RAN notification area configuration, and the RAN notification area configuration includes several cells or tracking areas. At this time, the first access network device saves the context of the terminal. After the terminal receives the connection release message, the context of the terminal is also saved.

In practical applications, steps 201 and 202 are executed in no sequential order. Specifically, step 201 may be executed first, and then step 202 may be executed, or step 202 may be executed first, and then step 201 may be executed, or step 201 and step 201 may be executed simultaneously.

The first access network device sends the above-mentioned information through an interface (such as an Xn or X2 interface, etc.) with the second access network device, and the three pieces of information may be carried in one message (that is, one signaling) for being sent, or may be carried in different messages and sent through multiple messages, which will not be limited in the embodiment of the present application. In practical applications, the message carrying the above-mentioned information may be a secondary node release request (S-NODE RELEASE REQUEST) message, or a secondary node modification request (S-NODE MODIFICATION REQUEST) message, etc.

The first information is used by the secondary node to send a RAN paging message including the terminal identifier (such as a terminal ID), so that the corresponding slice can reach the terminal. The first access network device will also save the RAN notification area configuration of the terminal, so that after receiving the downlink data of the terminal, a RAN paging including the terminal identifier (such as a resume ID (resume ID)) is initiated based on the RAN notification area configuration.

The second information is specifically configured to indicate that the secondary node suspends a connection with the terminal, and it can also be understood as indicating to save the context of the terminal, or it can be understood as saving the connection with the core network (it can also be understood as maintaining the connection with the core network), that is, the second access network device suspends the connection with the terminal according to the second information, saves the context of the terminal, and saves the connection with the core network.

Based on this, in an embodiment, the second information indicates at least one of the following:
indicating the second access network device to suspend the connection with the terminal;
indicating the second access network device to save a context of the terminal;
indicating the second access network device to save the connection with a core network.

The third information may specifically be a terminal ID and/or shortMAC-I. The terminal ID is used to identify the terminal, and may be a resume ID. The shortMAC-I is used for terminal identification or security verification.

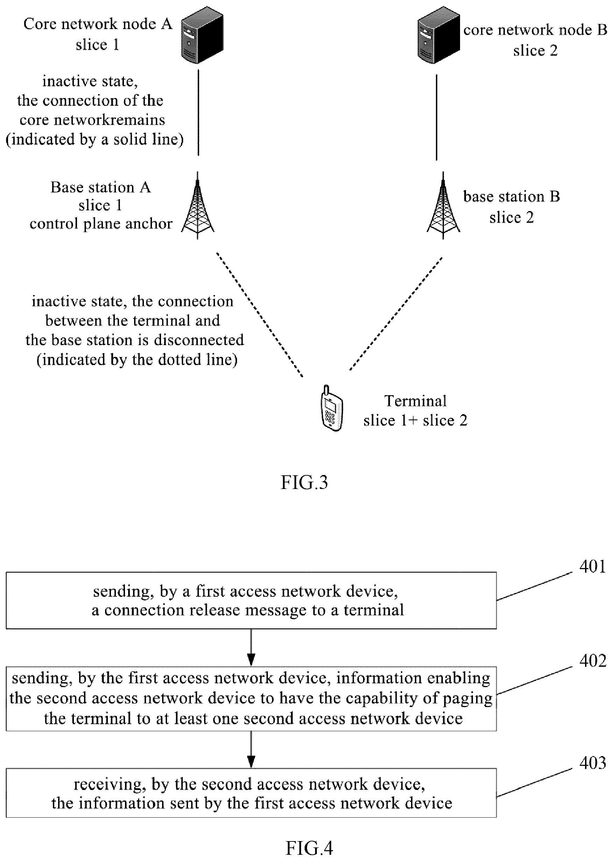

For example, the terminal may simultaneously support multiple slices in two different cells or frequency points; as shown in FIG. 3, in a case that the terminal respectively obtains the services of two slices through two base stations, the terminal accesses the two base stations through the DC, where the base station A is the primary node, and the base station B is the secondary node. The anchor point of the terminal in an inactive state may be in one base station, or may be in multiple base stations. At this time, as shown in FIG. 3, after the terminal enters the inactive state from the connected state, the base station needs to maintain the connection with the core network and disconnect the connection with the terminal.

At this time, base station A sends a connection release message to the terminal, and carries the RAN notification area configuration in the message, and the RAN notification area configuration includes several cells or tracking areas.

Base station A sends at least one of the following information to base station B:
first information;
second information;
third information.

As the master node, base station A is the control anchor point and the anchor point of slice 1; base station A suspends the connection with the terminal, saves the context of the terminal, and maintains the connection with the core network.

Base station B is the anchor point of slice 2; after receiving the information, base station B suspends the connection with the terminal, saves the context of the terminal, and maintains the connection with the core network, since the terminal information (including the context and/or terminal identifier) is saved, base station B has the capability of paging the terminal, and the terminal in the inactive state can also receive information from slice 2, thereby achieving slice 2 online.

At the same time, after receiving the message, the terminal saves the context and enters the inactive state.

The connection between the terminal and the two base stations is suspended, while the primary and secondary node base stations save the terminal context.

Since the primary node and the secondary node, that is, the first access network device and the second access network device, both save the RAN notification area configuration of the terminal, they can both initiate RAN paging; in addition, since the first access network device and the second access network device save information of the terminal, including at least one of context and identifier, both the primary node and the secondary node have the capability of paging the terminal.

A terminal in an inactive state only needs to receive a paging message from the serving cell. After receiving the paging message, the terminal will initiate a connection request to restore the connection with the primary node and/or the secondary node.

In practical applications, the terminal may report its own capabilities, so that the network side knows whether the at least two slices allowed by the terminal need to be obtained from at least two cells or frequency points.

Based on this, in an embodiment, the method may also include:
receiving a capability reported by the terminal, where the capability represents whether at least two slices allowed by the terminal need to be obtained from at least two cells or frequency points.

That is to say, the capability represents whether the terminal simultaneously supports at least two network slices in at least two cells or frequency points.

In a case that the terminal simultaneously supports at least two network slices in at least two cells or frequency points, the reported capability represents that the terminal simultaneously supports at least two network slices in at least two cells or frequency points.

In a case that the terminal does not support the above-mentioned capability, even if the terminal reports multiple supported slices, the slices allowed by the network side configuration still only include the slices supported by the serving cell. For example, in the scenario shown in FIG. 1, the terminal is in the serving cell 2. In a case that the terminal supports the above-mentioned capability, the terminal reports the supported slices including slice 1 and slice 2 to the network side, and the slices allowed by the network side configuration include slice 1 and slice 2; in a case that the terminal does not support the above-mentioned capability, although the supported slices reported by the terminal network side include slice 1 and slice 2, the slices allowed by the network side configuration only include slice 1.

In practical applications, in a case that the terminal does not report the above-mentioned capability, the network side will consider the terminal does not have the above-mentioned capability, and the slices allowed by the network side configuration still only include slices supported by the serving cell.

In a case that downlink data (that is, data sent to the terminal) is received, the first access network device may use the RAN notification area configuration information to initiate RAN paging to the terminal.

Correspondingly, the embodiment of the present application also provides an information transmission method, applied to the second access network device, which includes:
receiving at least one of the following information sent by a first access network device:
first information, where the first information indicates an RAN notification area configuration of a terminal;
second information, where the second information indicates at least one of the second access network device to disconnect from the terminal;
third information, where the third information indicates an identifier of the terminal.

In an embodiment, when the first information is received, that is, in a case that the first information is received, when downlink data is received, the RAN notification area configuration information is used to initiate a RAN paging to the terminal. Specifically, a paging message including the terminal identifier is sent, and the paging message of the terminal is sent to other access network devices in the RAN notification area through the interface between the access network devices, so as to trigger the paging message including the terminal identifier sent by the access network device in the RAN notification area.

When the second information is received, that is, in a case that the second information is received, the second access network device suspends the connection with the terminal according to the second information, saves the context of the terminal, and saves the connection with the core network, so that the terminal in the inactive state can be paged.

When the third information is received, that is, in a case that the third information is received, the second access network device saves the terminal identifier, so that the terminal in the inactive state can be paged by using the third information.

When the first information is not received, the second access network device may initiate a paging to the terminal based on default notification area configuration (such as tracking area configuration) information.

Correspondingly, the embodiment of the present application also provides an information transmission method, applied to a terminal, which includes:
receiving a connection release message sent by a first access network device, where the terminal is connected to the first access network device and at least one second access network device, and the terminal support at least two network slices in at least two cells or frequency points simultaneously.

In an embodiment, the method may also include:
receiving information of an allowed network slice sent by the first access network device, where the allowed network slice includes a first network slice; the first access network device does not support the first network slice; the second access network device supports the first network slice; the terminal can access the second access network device through CA or multi-connection.

In one embodiment, the method may also include:
reporting a capability to the first access network device, where the capability represents that the terminal simultaneously supports at least two network slices in at least two cells or frequency points.

In one embodiment, the method may also include:
receiving a RAN paging message initiated by the first access network device and/or the second access network device.

The embodiment of the present application also provides an information transmission method, as shown in FIG. 4, the method includes:
Step 401: sending, by a first access network device, a connection release message to a terminal;
Step 402: sending, by the first access network device, information enabling the second access network device to have the capability of paging the terminal to at least one second access network device;

That is, the second access network device sends at least one of the following information:
first information, where the first information indicates an RAN notification area configuration of the terminal;
second information, where the second information indicates the second access network device to disconnect from the terminal;
third information, where the third information indicates an identifier of the terminal.

Step 403: receiving, by the second access network device, the information sent by the first access network device.

It should be noted that: the specific processing processes of the first access network device and the second access network device have been described in detail above, and will not be repeated here.

In the information transmission method provided by the embodiment of the present application, the first access network device sends a connection release message to the terminal; and sends at least one of the following information to at least one second access network device: first information, where the first information indicates an RAN notification area configuration of the terminal; second information, where the second information indicates the second access network device to disconnect from the terminal; third information, where the third information indicates an identifier of the terminal; the second access network device receives the information sent by the first access network device; in the scheme provided by the embodiment of the present application, in the process of the terminal entering the inactive state, since the information that enables the secondary node to also have the capability of paging the terminal is sent to the secondary node, so that both the primary node and the secondary node have the capability of paging the terminal, and a terminal in the inactive state obtain services of slices of different cells or frequency points simultaneously, and receive paging messages of different slices.

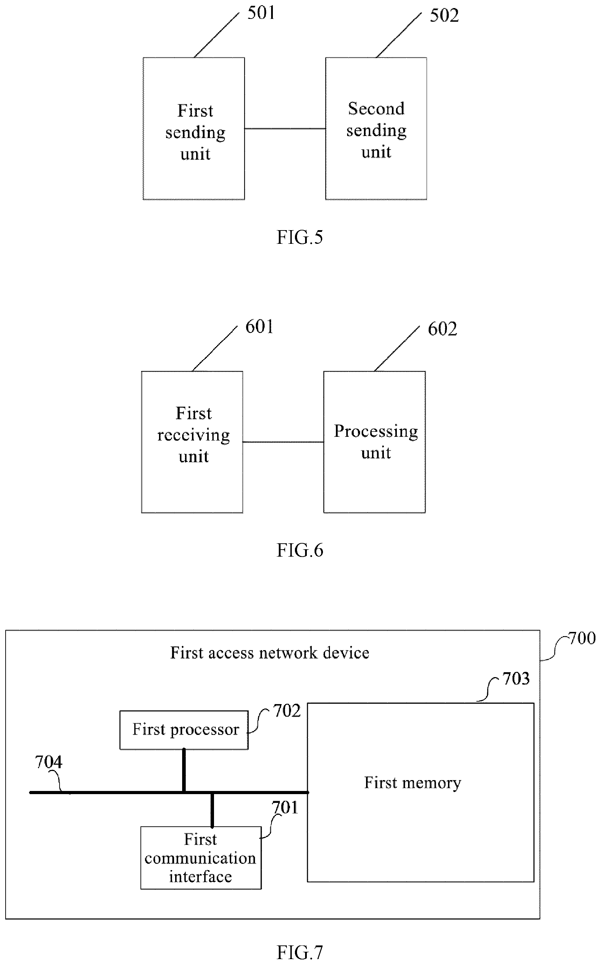

In order to implement the method of the embodiment of the present application, the embodiment of the present application also provides an information transmission apparatus, which is arranged on the first access network device, as shown in FIG. 5, the apparatus includes:
a first sending unit 501, configured to send a connection release message to a terminal;
a second sending unit 502, configured to send at least one of the following information to at least one second access network device:
first information, where the first information indicates an RAN notification area configuration of the terminal;
second information, where the second information indicates the second access network device to disconnect from the terminal;
third information, where the third information indicates an identifier of the terminal.

In an embodiment, the apparatus may also include:
a second receiving unit, configured to receive a capability reported by the terminal, where the capability represents whether at least two slices allowed by the terminal need to be obtained from at least two cells or frequency points.

In one embodiment, the apparatus may also include:
a first paging unit, configured to use the RAN notification area configuration information to initiate RAN paging to the terminal in a case that downlink data is received.

In practical applications, the first sending unit 501, the second sending unit 502, and the second receiving unit may be realized by a communication interface in the information transmission apparatus; the first paging unit may be realized by a processor in the information transmission apparatus combined with a communication interface.

In order to implement the method of the second access network device side in the embodiment of the present application, the embodiment of the present application also provides an information transmission apparatus, which is arranged on the second access network device, as shown in FIG. 6, the apparatus includes:
a first receiving unit 601, configured to receive at least one of the following information sent by the first access network device:
first information, where the first information indicates an RAN notification area configuration of a terminal;
second information, where the second information indicates at least one of the second access network device to disconnect from the terminal;
third information, where the third information indicates an identifier of the terminal.

In one embodiment, as shown in FIG. 6, the apparatus may also include:
a processing unit 602, configured to use the second information to suspend the connection with the terminal, save the context of the terminal, and save the connection with the core network, so that the terminal in the inactive state can be paged.

The processing unit is further configured to save the terminal identifier, so that the terminal in the inactive state can be paged by using the third information.

In one embodiment, the apparatus may also include:
a second paging unit, configured to use the RAN notification area configuration information to initiate RAN paging to the terminal in a case that downlink data is received.

In a case that the first information is not received, the second paging unit is further configured to initiate a paging to the terminal based on default notification area configuration (such as tracking area configuration) information.

In practical applications, the first receiving unit 601 can be realized by a communication interface in the information transmission apparatus; the processing unit 602 and the second paging unit can be realized by a processor in the information transmission apparatus combined with a communication interface.

In order to implement the method of the embodiment of the present application, the embodiment of the present application also provides an information transmission apparatus, which is arranged on the terminal, and the apparatus includes:
a third receiving unit, configured to receive a connection release message sent by a first access network device, where the terminal is connected to the first access network device and at least one second access network device, and the terminal support at least two network slices in at least two cells or frequency points simultaneously.

In an embodiment, the third receiving unit is further configured to receive allowed network slice information sent by the first access network device; the allowed network slice includes the first network slice; the first access network device does not support the first network slice; the second access network device supports the first network slice; the terminal can access the second access network device through CA or multi-connection.

In an embodiment, the apparatus may further include: a reporting unit, configured to report a capability to the first access network device; where the capability represents that the terminal simultaneously supports at least two network slices in at least two cells or frequency points.

In an embodiment, the third receiving unit is configured to receive a RAN paging message initiated by the first access network device and/or the second access network device.

In practical applications, the third receiving unit may be realized by a communication interface in the information transmission apparatus; the reporting unit may be realized by a processor in the information transmission apparatus combined with a communication interface.

It should be noted that when the information transmission apparatus provided in the above-mentioned embodiment transmits information, the division of the above-mentioned program modules is only used for illustration, in practical applications, the above-mentioned processing assignment may be accomplished by different program modules according to needs, that is, the internal structure of the apparatus is divided into different program modules, so as to complete all or part of the processing described above. In addition, the information transmission apparatus and the information transmission method embodiments provided in the above-mentioned embodiments belong to the same concept, and the specific implementation process thereof is detailed in the method embodiments, and will not be repeated here.

Based on the hardware implementation of the above-mentioned program modules, and in order to implement the method on the first access network device side in the embodiment of the present application, the embodiment of the present application also provides a first access network device, as shown in FIG. 7, the first access network device 700 includes:
a first communication interface 701, capable of performing information interaction with a second access network device and a terminal;
a first processor 702, connected to the first communication interface 701 to implement information interaction with the second access network device and the terminal, and configured to execute the method provided by one or more technical solutions on the above-mentioned first access network device side when running a computer program;
a first memory 703, where the computer program is stored on the first memory 703.

Specifically, the first communication interface 701 is configured to send a connection release message to the terminal; and is configured to send at least one of the following information to at least one second access network device:
first information, where the first information indicates an RAN notification area configuration of a terminal;
second information, where the second information indicates the second access network device to disconnect from the terminal;
third information, where the third information indicates an identifier of the terminal.

In an embodiment, the first communication interface 701 is configured to receive a capability reported by the terminal; the capability represents whether the at least two slices allowed by the terminal need to be obtained from at least two cells or frequency points.

In an embodiment, a first processor 702 is configured to use RAN notification area configuration information to initiate RAN paging to the terminal through the first communication interface 701 when receiving downlink data.

It should be noted that the specific processing processes of the first processor 702 and the first communication interface 701 can be understood with reference to the above-mentioned method.

Of course, in practical applications, various components in the first access network device 700 are coupled together through the bus system 704. It can be appreciated that the bus system 704 is configured to implement connection communication between these components. In addition to the data bus, the bus system 704 also includes a power bus, a control bus and a status signal bus. However, for clarity of illustration, the various buses are labeled as bus system 704 in FIG. 7.

The first memory 703 in this embodiment of the present application is configured to store various types of data to support operations of the first access network device 700. Examples of such data include: any computer program used for being operated on the first access network device 700.

The methods disclosed in the foregoing embodiments of the present application may be applied to the first processor 702 or implemented by the first processor 702. The first processor 702 may be an integrated circuit chip, which has a signal processing capability. In the implementation process, each step of the above-mentioned method may be completed by an integrated logic circuit of hardware in the first processor 702 or instructions in the form of software. The aforementioned first processor 702 may be a general-purpose processor, a digital signal processor (DSP, Digital Signal Processor), or other programmable logic device, a discrete gate or a transistor logic device, a discrete hardware component, and the like. The first processor 702 may implement or execute various methods, steps, and logic block diagrams disclosed in the embodiments of the present application. The general-purpose processor may be a microprocessor or any conventional processor or the like. The steps of the method disclosed in the embodiments of the present application may be directly implemented by a hardware decoding processor, or implemented by a combination of hardware and software modules in the decoding processor. The software module may be located in a storage medium, and the storage medium is located in the first memory 703, and the first processor 702 reads the information in the first memory 703, and completes the steps of the aforementioned method in combination with its hardware.

In an exemplary embodiment, the first access network device 700 may be implemented by one or more Application Specific Integrated Circuits (ASIC, Application Specific Integrated Circuit), DSP, Programmable Logic Device (PLD, Programmable Logic Device), complex programmable Logic device (CPLD, Complex Programmable Logic Device), field programmable gate array (FPGA, Field-Programmable Gate Array), general-purpose processor, controller, microcontroller (MCU, Micro Controller Unit), microprocessor (Microprocessor) , or implemented by other electronic components, configured to perform the aforementioned method.

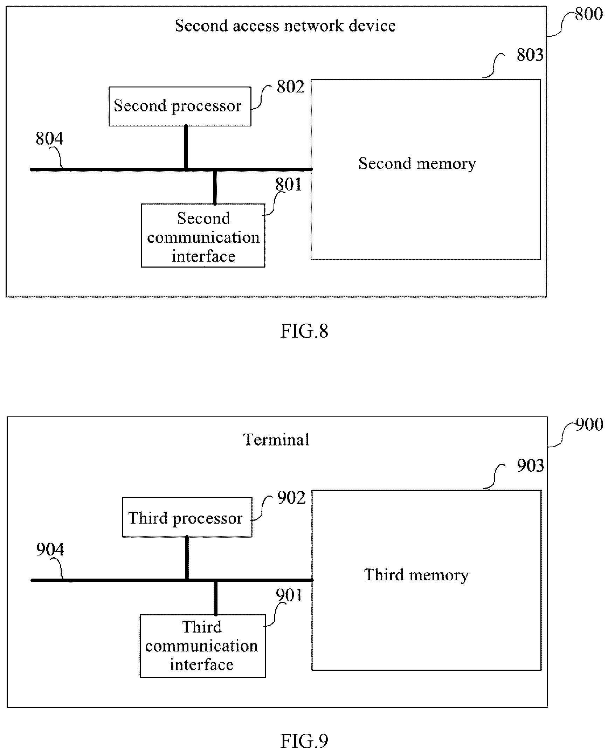

Based on the hardware implementation of the above-mentioned program modules, and in order to implement the method on the second access network device side in the embodiment of the present application, the embodiment of the present application also provides a second access network device, as shown in FIG. 8, the second access network device 800 includes:
a second communication interface 801, capable of performing information interaction with the first access network device and the terminal;
a second processor 802, connected to the second communication interface 801 to implement information interaction with the first access network device and the terminal, and configured to execute the method provided by one or more technical solutions on the above-mentioned second access network device side when running a computer program;
a second memory 803, where the computer program is stored on the second memory 803.

Specifically, the second communication interface 801 is configured to receive at least one of the following information sent by the first access network device:
first information, where the first information indicates an RAN notification area configuration of a terminal;
second information, where the second information indicates at least one of the second access network device to disconnect from the terminal;
third information, where the third information indicates an identifier of the terminal.

The second processor 802 is configured to use the second information to suspend the connection with the terminal, save the context of the terminal, and save the connection with the core network, so as to be able to page the terminal in the inactive state.

The processing unit is further configured to save the terminal identifier, so that the terminal in the inactive state can be paged by using the third information.

In an embodiment, the second processor 802 is configured to use RAN notification area configuration information to initiate RAN paging to the terminal through the second communication interface 801 when receiving downlink data.

When the first information is not received, the second processor 802 is further configured to initiate a paging to the terminal through the second communication interface 801 based on default notification area configuration (such as tracking area configuration) information.

It should be noted that: the specific processing process of the second processor 802 can be understood with reference to the above-mentioned method.

Of course, in practical applications, various components in the second access network device 800 are coupled together through the bus system 804. It can be appreciated that the bus system 804 is configured to implement connection communication between these components. In addition to the data bus, the bus system 804 also includes a power bus, a control bus and a status signal bus. However, for clarity of illustration, the various buses are labeled as bus system 804 in FIG. 8.

The second memory 803 in this embodiment of the present application is configured to store various types of data to support operations of the second access network device 800. Examples of such data include: any computer program used for being operated on the second access network device 800.

The methods disclosed in the foregoing embodiments of the present application may be applied to the second processor 802 or implemented by the second processor 802. The second processor 802 may be an integrated circuit chip, which has a signal processing capability. In the implementation process, each step of the above-mentioned method may be completed by an integrated logic circuit of hardware in the second processor 802 or instructions in the form of software. The aforementioned second processor 802 may be a general-purpose processor, a DSP, or other programmable logic device, a discrete gate or a transistor logic device, a discrete hardware component, and the like. The second processor 802 may implement or execute various methods, steps, and logic block diagrams disclosed in the embodiments of the present application. The general-purpose processor may be a microprocessor or any conventional processor or the like. The steps of the method disclosed in the embodiments of the present application may be directly implemented by a hardware decoding processor, or implemented by a combination of hardware and software modules in the decoding processor. The software module may be located in a storage medium, and the storage medium is located in the second memory 803, and the second processor 802 reads the information in the second memory 803, and completes the steps of the aforementioned method in combination with its hardware.

In an exemplary embodiment, the second access network device 800 may be implemented by one or more ASICs, DSPs, PLDs, CPLDs, FPGAs, general-purpose processors, controllers, MCUs, Microprocessors, or other electronic components, configured to execute the aforementioned method.

Based on the hardware implementation of the above-mentioned program modules, and in order to implement the method on the terminal side of the embodiment of the present application, the embodiment of the present application also provides a terminal, as shown in FIG. 9, the terminal 900 includes:
a third communication interface 901, capable of performing information interaction with the access network device;
a third processor 902, connected to the third communication interface 901 to implement information interaction with the access network device, and configured to execute the method provided by one or more technical solutions on the above-mentioned terminal side when running the computer program;
a third memory 903, where the computer program is stored on the third memory 903.

Specifically, the third communication interface 901 is configured to receive a connection release message sent by a first access network device; the terminal is connected to the first access network device and at least one second access network device, and the terminal support at least two network slices in at least two cells or frequency points simultaneously.

In an embodiment, the third communication interface 901 is further configured to receive allowed network slice information sent by the first access network device; the allowed network slice includes a first network slice; the first access network device does not support the first network slice; the second access network device supports the first network slice; the terminal can access the second access network device through CA or multi-connection.

In an embodiment, the third processor 902 is configured to report a capability to the first access network device through the third communication interface 901; the capability represents that the terminal simultaneously supports at least two network slices in at least two cells or frequency points.

In an embodiment, the third communication interface 901 is configured to receive a RAN paging message initiated by the first access network device and/or the second access network device.

Of course, in practical applications, various components in the terminal 900 are coupled together through the bus system 904. It can be appreciated that the bus system 904 is configured to implement connection communication between these components. In addition to the data bus, the bus system 904 also includes a power bus, a control bus and a status signal bus. However, for clarity of illustration, the various buses are labeled as bus system 904 in FIG. 9.

The third memory 903 in this embodiment of the present application is configured to store various types of data to support operations of the terminal 900. Examples of such data include: any computer program used for being operated on the terminal 900.

The methods disclosed in the foregoing embodiments of the present application may be applied to the third processor 902 or implemented by the third processor 902. The third processor 902 may be an integrated circuit chip, which has a signal processing capability. In the implementation process, each step of the above-mentioned method may be completed by an integrated logic circuit of hardware in the third processor 902 or instructions in the form of software. The aforementioned third processor 902 may be a general-purpose processor, a DSP, or other programmable logic device, a discrete gate or a transistor logic device, a discrete hardware component, and the like. The third processor 902 may implement or execute various methods, steps, and logic block diagrams disclosed in the embodiments of the present application. The general-purpose processor may be a microprocessor or any conventional processor or the like. The steps of the method disclosed in the embodiments of the present application may be directly implemented by a hardware decoding processor, or implemented by a combination of hardware and software modules in the decoding processor. The software module may be located in a storage medium, and the storage medium is located in the third memory 903, and the third processor 902 reads the information in the third memory 903, and completes the steps of the aforementioned method in combination with its hardware.

In an exemplary embodiment, the terminal 900 may be implemented by one or more ASICs, DSPs, PLDs, CPLDs, FPGAs, general-purpose processors, controllers, MCUs, Microprocessors, or other electronic components, configured to execute the aforementioned method.

It can be understood that the memory (the first memory 703, the second memory 803, and the third memory 903) in the embodiment of the present application may be a volatile memory or a non-volatile memory, and may also include volatile and non-volatile memory both, where the non-volatile memory may be read-only memory (ROM, Read Only Memory), programmable read-only memory (PROM, Programmable Read-Only Memory), erasable programmable read-only memory (EPROM, Erasable Programmable Read-Only Memory), Electrically Erasable Programmable Read-Only Memory (EEPROM, Electrically Erasable Programmable Read-Only Memory), Magnetic Random Access Memory (FRAM, ferromagnetic random access memory), Flash Memory (Flash Memory), Magnetic Surface Memory, CD, or CD-ROM (CD-ROM, Compact Disc Read-Only Memory); magnetic surface memory may be disk memory or tape memory. The volatile memory may be random access memory (RAM, Random Access Memory), which acts as an external cache. By way of illustration and not limitation, many forms of RAM are available such as static random access memory (SRAM, Static Random Access Memory), synchronous static random access memory (SSRAM, Synchronous Static Random Access Memory), dynamic random access memory (DRAM, Dynamic Random Access Memory), synchronous dynamic random access memory (SDRAM, Synchronous Dynamic Random Access Memory), double data rate synchronous dynamic random access memory (DDRSDRAM, Double Data Rate Synchronous Dynamic Random Access Memory), enhanced synchronous dynamic random access memory (ESDRAM, Enhanced Synchronous Dynamic Random Access Memory), synchronous connection dynamic random access memory (SLDRAM, SyncLink Dynamic Random Access Memory), direct memory bus random access memory (DRRAM, Direct Rambus Random Access Memory). The memories described in the embodiments of the present application are intended to include, but are not limited to, these and any other suitable types of memories.

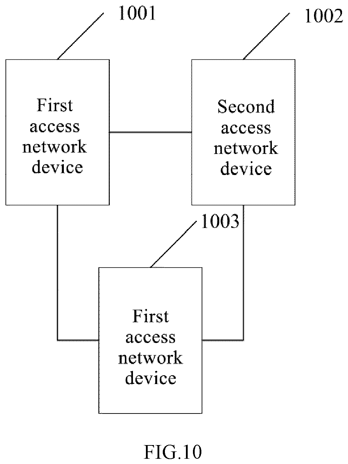

In order to implement the method provided by the embodiment of the present application, the embodiment of the present application also provides an information transmission system, as shown in FIG. 10, the system includes: a first access network device 1001, a second access network device 1002 and a terminal 1003.

Here, it should be noted that: the specific processing processes of the first access network device 1001, the second access network device 1002, and the terminal 1003 have been described in detail above, and will not be repeated here.

In an exemplary embodiment, the embodiment of the present application also provides a storage medium, that is, a computer storage medium, specifically a computer-readable storage medium, for example, including a first memory 703 storing a computer program, the above-mentioned computer program can be executed by the first processor 702 of the first access network device 700 to complete the steps described in the above-mentioned method on first access network device side, and another example includes a second memory 803 storing the computer program, the above-mentioned computer program can be executed by the second processor 802 of the second access network device 800 to complete the steps of the aforementioned method on the second access network device side, and another example includes a third memory 903 storing computer programs, the above-mentioned computer program may be executed by the third processor 902 of the terminal 900 to complete the steps of the aforementioned method on the terminal side. The computer-readable storage medium may be memory such as FRAM, ROM, PROM, EPROM, EEPROM, Flash Memory, magnetic surface memory, optical disk, or CD-ROM.

It should be noted that: "first", "second", etc. are used to distinguish similar objects, and not necessarily used to describe a specific order or sequence.

In addition, the technical solutions described in the embodiments of the present application may be combined arbitrarily in a case that there is no conflict.

The above descriptions are only preferred embodiments of the present application, and are not intended to limit the protection scope of the present application.

## Claims

1. An information transmission method, applied to a first access network device, comprising:
sending a connection release message to a terminal;
sending at least one of the following information to at least one second access network device:
first information, wherein the first information indicates a radio access network (RAN) notification area configuration of the terminal;
second information, wherein the second information indicates the second access network device to disconnect from the terminal;
third information, wherein the third information indicates an identifier of the terminal.

2. The method according to claim 1, wherein the second information indicates at least one of the following:
indicating the second access network device to suspend the connection with the terminal;
indicating the second access network device to save a context of the terminal;
indicating the second access network device to save the connection with a core network.

3. The method according to claim 1, wherein the terminal support at least two network slices in at least two cells or frequency points simultaneously.

4. The method according to claim 3, wherein the method further comprises:
sending information of an allowed network slice to the terminal, wherein the allowed network slice comprises a first network slice; the first access network device does not support the first network slice; the second access network device supports the first network slice; the terminal can access the second access network device through carrier aggregation or multi-connection.

5. The method according to claim 3, wherein the method further comprises:
receiving a capability reported by the terminal, wherein the capability represents that the terminal simultaneously supports at least two network slices in at least two cells or frequency points.

6. The method according to any one of claims 1 to 5, wherein the method further comprises:
using, in a case that downlink data is received, information of the RAN notification area configuration to initiate an RAN paging to the terminal.

7. An information transmission method, applied to a second access network device, comprising:
receiving at least one of the following information sent by a first access network device:
first information, wherein the first information indicates an RAN notification area configuration of a terminal;
second information, wherein the second information indicates at least one of the second access network device to disconnect from the terminal;
third information, wherein the third information indicates an identifier of the terminal.

8. The method according to claim 7, wherein the second information indicates at least one of the following:
indicating the second access network device to suspend the connection with the terminal;
indicating the second access network device to save a context of the terminal;
indicating the second access network device to save the connection with a core network.

9. The method according to claim 7, wherein the terminal support at least two network slices in at least two cells or frequency points simultaneously.

10. The method according to any one of claims 7 to 9, comprising: using, in a case that the first information is received, when downlink data is received, information of the RAN notification area configuration to initiate an RAN paging to the terminal.

11. An information transmission method, applied to a terminal, comprising:
receiving a connection release message sent by a first access network device, wherein the terminal is connected to the first access network device and at least one second access network device, and the terminal support at least two network slices in at least two cells or frequency points simultaneously.

12. The method of claim 11, wherein the method further comprises:
receiving information of an allowed network slice sent by the first access network device, wherein the allowed network slice comprises a first network slice; the first access network device does not support the first network slice; the second access network device supports the first network slice; the terminal can access the second access network device through carrier aggregation or multi-connection.

13. The method according to claim 11, wherein the method further comprises:
reporting a capability to the first access network device, wherein the capability represents that the terminal simultaneously supports at least two network slices in at least two cells or frequency points.

14. The method according to any one of claims 11 to 13, wherein the method further comprises:
receiving a RAN paging message initiated by the first access network device and/or the second access network device.

15. An information transmission apparatus, comprising:
a first sending unit, configured to send a connection release message to a terminal;
a second sending unit, configured to send at least one of the following information to at least one second access network device:
first information, wherein the first information indicates an RAN notification area configuration of the terminal;
second information, wherein the second information indicates the second access network device to disconnect from the terminal;
third information, wherein the third information indicates an identifier of the terminal.

16. An information transmission apparatus, comprising:
a first receiving unit, configured to receive at least one of the following information sent by a first access network device:
first information, wherein the first information indicates an RAN notification area configuration of a terminal;
second information, wherein the second information indicates at least one of the second access network device to disconnect from the terminal;
third information, wherein the third information indicates an identifier of the terminal.

17. An information transmission apparatus, arranged in a terminal, comprising:
a third receiving unit, configured to receive a connection release message sent by a first access network device, wherein the terminal is connected to the first access network device and at least one second access network device, and the terminal support at least two network slices in at least two cells or frequency points simultaneously.

18. A first access network device, comprising: a first communication interface and a first processor; wherein
the first communication interface is configured to send a connection release message to a terminal; and is configured to send at least one of the following information to at least one second access network device:
first information, wherein the first information indicates an RAN notification area configuration of a terminal;
second information, wherein the second information indicates the second access network device to disconnect from the terminal;
third information, wherein the third information indicates an identifier of the terminal.

19. A second access network device, comprising: a second communication interface and a second processor; wherein
the second communication interface is configured to receive at least one of the following information sent by the first access network device:
first information, wherein the first information indicates an RAN notification area configuration of a terminal;
second information, wherein the second information indicates at least one of the second access network device to disconnect from the terminal;
third information, wherein the third information indicates an identifier of the terminal.

20. A terminal, comprising: a third communication interface and a third processor; wherein
the third communication interface is configured to receive a connection release message sent by a first access network device; the terminal is connected to the first access network device and at least one second access network device, and the terminal support at least two network slices in at least two cells or frequency points simultaneously.

21. A first access network device, comprising: a first processor and a first memory configured to store a computer program capable of running on the processor,
wherein the first processor is configured to execute the steps of the method according to any one of claims 1 to 6 when running the computer program.

22. A second communication device comprises: a second processor and a second memory configured to store a computer program capable of running on the processor,
wherein the second processor is configured to execute the steps of the method according to any one of claims 7 to 10 when running the computer program.

23. A terminal comprises: a third processor and a third memory configured to store a computer program capable of running on the processor,
wherein the third processor is configured to execute the steps of the method according to any one of claims 11 to 14 when running the computer program.

24. A storage medium, on which a computer program is stored, and when the computer program is executed by a processor, the steps of the method according to any one of claims 1 to 6 are implemented, or the steps of the method according to any one of claims 7 to 10 are implemented, or the steps of the method according to any one of claims 11 to 14 are implemented.
